# FASCICULE DE BREVET EUROPEEN

(11) **EP 4 373 745 B1**
(45) Date de publication et mention de la délivrance du brevet: **22.04.2026**
(21) Numéro de dépôt: 22757619.6
(22) Date de dépôt: 21.07.2022
(51) Int. Cl.: B64D 33/08, B64B 1/28, B64D 45/00

(54) **SYSTÈME POUR GÉRER THERMIQUEMENT UNE NACELLE EXTERNE DE PRODUCTION D'ÉNERGIE ÉLECTRIQUE ÉQUIPANT UN DIRIGEABLE À PROPULSION ÉLECTRIQUE, NACELLE ET DIRIGEABLE ÉQUIPÉS DE CE SYSTÈME**
SYSTEM ZUR WÄRMEVERWALTUNG EINER EXTERNEN STROMERZEUGENDEN GONDEL FÜR EIN ELEKTRISCH ANGETRIEBENES LUFTSCHIFF, GONDEL UND LUFTSCHIFF MIT DIESEM SYSTEM
SYSTEM FOR THE THERMAL MANAGEMENT OF AN EXTERNAL ELECTRIC-POWER-GENERATING NACELLE EQUIPPING AN ELECTRICALLY POWERED AIRSHIP, NACELLE AND AIRSHIP EQUIPPED WITH SAID SYSTEM

(30) Priorité: 21.07.2021 FR 2107860
(43) Date de publication de la demande: 29.05.2024
(73) Titulaire: Flying Whales, 92150 Suresnes (FR)
(72) Inventeur: GUILLOU, Pierrot, 92150 SURESNES (FR); GREGOIRE, Gilles, 92150 SURESNES (FR); DESGEORGES, Olivier, 92150 SURESNES (FR)
(74) Mandataire: IP Trust
(86) Numéro de dépôt international: PCT/FR2022/051452
(87) Numéro de publication internationale: WO 2023/002131

(56) Documents cités:
- EP-A1- 3 056 423
- WO-A1-03/037715
- WO-A1-93/16280
- CN-B- 107 416 214
- US-A1- 2016 258 358

## Description

### DOMAINE DE L'INVENTION

Le domaine de l'invention est celui de dirigeables de structure rigide à propulsion électrique, conçus pour le transport de charges lourdes, et plus particulièrement celui du refroidissement et de la ventilation de systèmes de production d'énergie électrique et des équipements auxiliaires associés embarqués dans ces dirigeables.

### ETAT DE LA TECHNIQUE

Les dirigeables porteurs de charges lourdes ont la particularité, grâce à leur système de vol électronique et leur propulsion hybride distribuée ou tout électrique, de réaliser des vols stationnaires longs pour opérer l'échange de change, une difficulté spécifique apparaît. En effet, sur les anciens dirigeables les moteurs étaient directement reliés aux hélices pour la propulsion, il y avait donc toujours un débit d'air « frais » permettant l'évacuation des calories au travers des échangeurs a conduites forcées ou par convection naturelle. Le document WO03037715A1 décrit un système de refroidissement de l'installation d'un groupe auxiliaire de bord (APU) d'un aéronef. Le système est conçu pour un groupe auxiliaire de bord ayant au moins une partie compresseur d'une turbine à gaz et d'un refroidisseur d'huile contenus séparément dans un fuseau. Le système comprend le groupe auxiliaire de bord logé dans le fuseau de l'aéronef, une ouverture d'échappement des moteurs définie dans la partie arrière du fuseau et communiquant avec la turbine à gaz, au moins un premier canal d'admission d'air communiquant avec une seconde ouverture définie dans ledit fuseau et avec ladite partie compresseur et le refroidisseur d'huile est placé dans un second canal communiquant avec une ouverture autre que l'ouverture d'échappement des moteurs dudit fuseau et avec l'ouverture d'échappement des moteurs. L'air de refroidissement extérieur et l'échappement des moteurs expulsés par ladite ouverture d'échappement des moteurs entraînent l'air de refroidissement à travers ledit second canal vers ledit refroidisseur d'huile, ce qui produit le refroidissement de l'huile des moteurs.

Sur les dirigeables à propulsion électrique, les turbines, puis dans le futur les piles à combustible, ne servant qu'à produire la puissance primaire mécanique permettant au générateur électrique de produire l'électricité nécessaire à l'alimentation des équipements de bords (propulsion, levage, système de contrôle de vol) celle-ci n'est pas reliée à une hélice. Malgré le fait qu'elle « aspire » de l'air pour alimenter son cycle thermodynamique et donc créer un flux d'air frais, il est fortement déconseillé de réaliser ce genre d'architecture pour deux raisons principales :
- La réglementation aérienne déconseille d'introduire des échangeurs contenant des fluides inflammables dans les conduites d'entrée d'air de la turbomachine, car en cas de fuites, par suite d'un impact de débris ingéré par exemple, une fuite pourrait être ingérée par la turbomachine et créer un feu interne qui pourrait se révéler catastrophique pour l'intégrité de cette dernière.
- Les turbines sont très sensibles en termes de rendements vis-à-vis des pertes de charge des entrées d'air et de leur échappement. L'introduction d'un échangeur dans le conduit d'entrée d'air de la turbomachine serait donc extrêmement pénalisante du point de vue rendement et performance globale de la chaîne de génération de puissance primaire.

Afin de traiter cette problématique, il est nécessaire d'introduire de nouvelles solutions et architectures permettant l'évacuation des calories générées par les systèmes vers l'environnement extérieur. Par ailleurs, comme il est nécessaire de confiner les systèmes turbogénérateurs complets dans des enceintes feu afin de réduire le risque de propagation du feu sur l'ensemble d'une nacelle embarquant ces turbogénérateurs, il est nécessaire de traiter globalement le problème du refroidissement de l'ensemble du système turbogénérateur au-delà des approches conventionnelles adaptées jusqu'ici.

### EXPOSE DE L'INVENTION

Cet objectif est atteint avec un dirigeable selon la revendication 1. Les revendications dépendantes 2-7 proposent des caractéristiques optionnelles selon l'invention revendiquée.

Cet agencement particulier des moyens d'évacuation de l'air de ventilation autour du conduit d'évacuation des gaz de combustion, telle une seconde peau, a pour effet de procurer un effet Venturi contribuant à énergiser l'air de ventilation et accélérer le flux sortant d'un mélange de gaz de combustion et d'air de ventilation.

Lorsque le système de gestion thermique est mis en œuvre avec au moins un turbogénérateur équipé d'une chambre plenum prévue pour homogénéiser l'air autour d'une grille d'aspiration équipant le conduit d'entrée d'air d'alimentation, l'enceinte de confinement peut alors avantageusement comprendre un capot avant disposé en amont de la chambre plenum et un capot arrière disposé en aval de la chambre plenum.

L'enceinte de confinement peut comporter une première paroi anti-feu séparant le capot avant de la chambre plenum et une seconde paroi anti-feu séparant le capot arrière de la chambre plenum.

Les moyens de ventilation peuvent comprendre un premier conduit d'injection d'air dans le capot avant et au moins un second conduit d'injection d'air dans le capot arrière.

Les moyens d'évacuation d'air de ventilation peuvent comprendre un conduit d'évacuation présentant une hauteur largement supérieure à celle du conduit d'évacuation des gaz de combustion et un diamètre sensiblement supérieur à celui dudit conduit d'évacuation des gaz de combustion.

Les moyens de ventilation peuvent de préférence être agencés pour procurer une ventilation forcée de l'enceinte de confinement feu.

Ce dirigeable peut être du type à structure rigide, dédié au transport de charges lourdes et au transfert vertical (*hovering*) de ces charges.

### BREVE DESCRIPTION DES FIGURES

La figure 1 représente une vue latérale d'un exemple de réalisation d'un dirigeable équipé de deux nacelles de production d'énergie électrique.
La figure 2 est une vue en perspective de l'intérieur d'une nacelle de production d'énergie électrique selon l'invention.
La figure 3 illustre quatre principes fonctionnels de ventilation et de refroidissement pouvant être mis en œuvre.
La figure 4 est une vue en perspective d'un exemple de réalisation d'un système de gestion thermique selon l'invention mis en œuvre dans une nacelle de production d'énergie électrique selon l'invention.
La figure 5 est une vue en coupe schématique d'un système de gestion thermique selon l'invention.
La figure 6 illustre une vue schématique en perspective du système de gestion thermique de la Figure 5.

### DESCRIPTION DETAILLEE

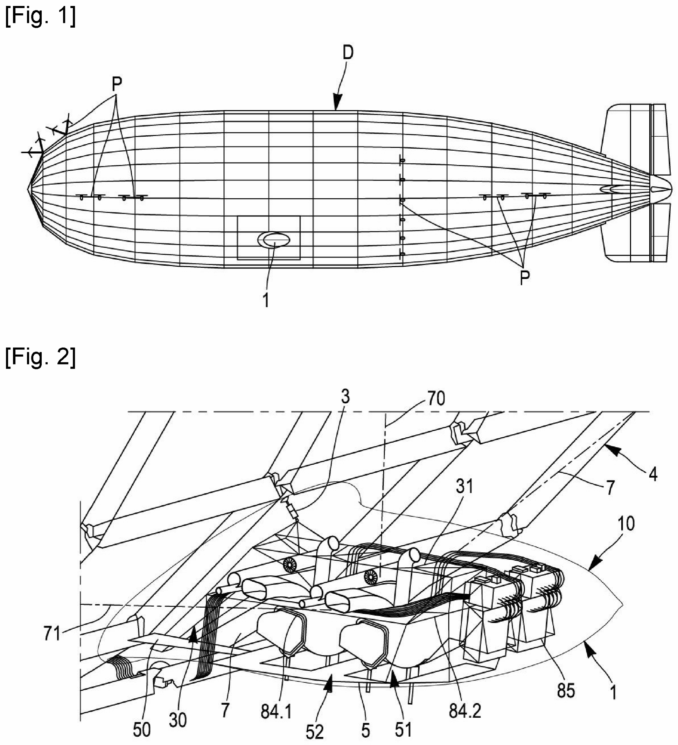

En référence à la figure 1, un dirigeable de structure rigide D comporte un ensemble de groupes propulseurs P alimentés en énergie électrique à partir de systèmes de production d'énergie électrique intégrés dans deux nacelles externes 1 en forme de nageoire (dont une seule est représentée sur la figure 1).

Une nacelle en forme de nageoire 1 comprend, en référence à la figure 2, une structure mécanique 30,32 réalisée à partir de treillis de poutres en matériau composite et recouverte d'une peau de coque ou de carénage 10. La partie supérieure 31 de la structure mécanique est reliée à un cadre 4 du corps principal du dirigeable via une interface mécanique 3 et trois câbles 7,70,71.

La nacelle 1 intègre deux groupes turbogénérateurs 84.1,84.2 montés suspendus à la partie supérieure 31 de la structure mécanique de la nacelle 1, un système de batteries de stockage 85, et un plancher 5.

Ce plancher 5 comprend une voie d'accès 50 depuis l'intérieur du dirigeable D dans la nacelle 1, et une partie de plancher 52 entourant les deux turbogénérateurs 84.1,84.2. Des parties évidées 51 sont ménagées dans le plancher 5 pour permettre une dépose des turbogénérateurs au moyen de treuils prévus sur la partie supérieure 31 de la structure mécanique.

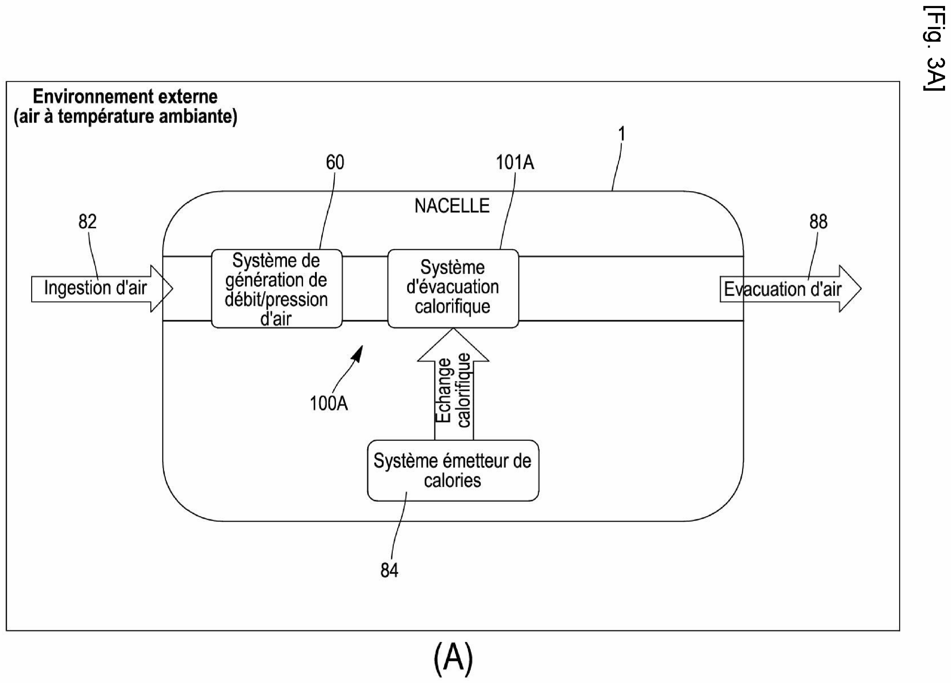

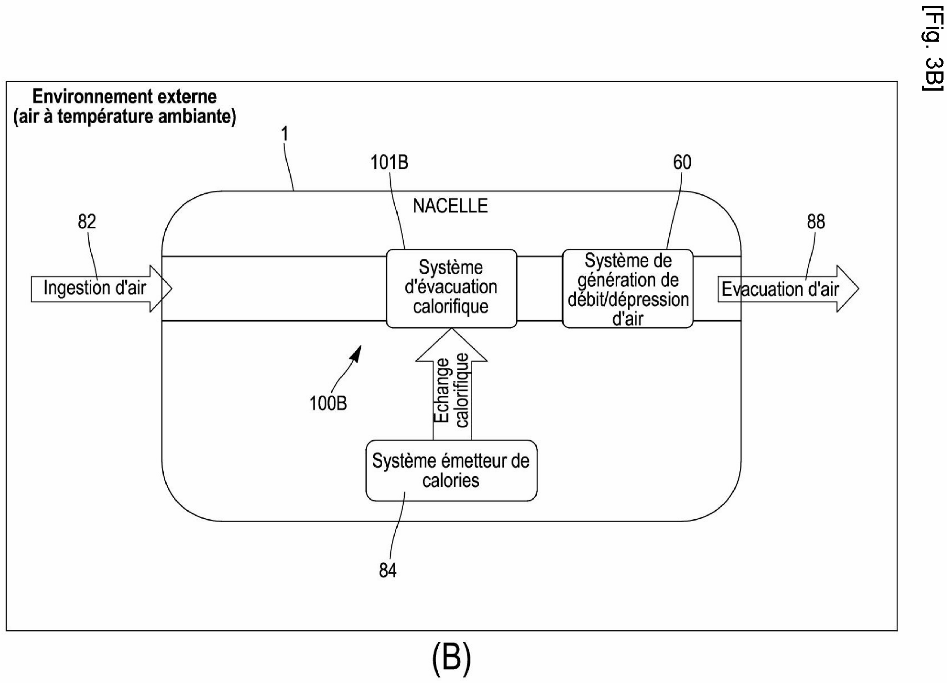

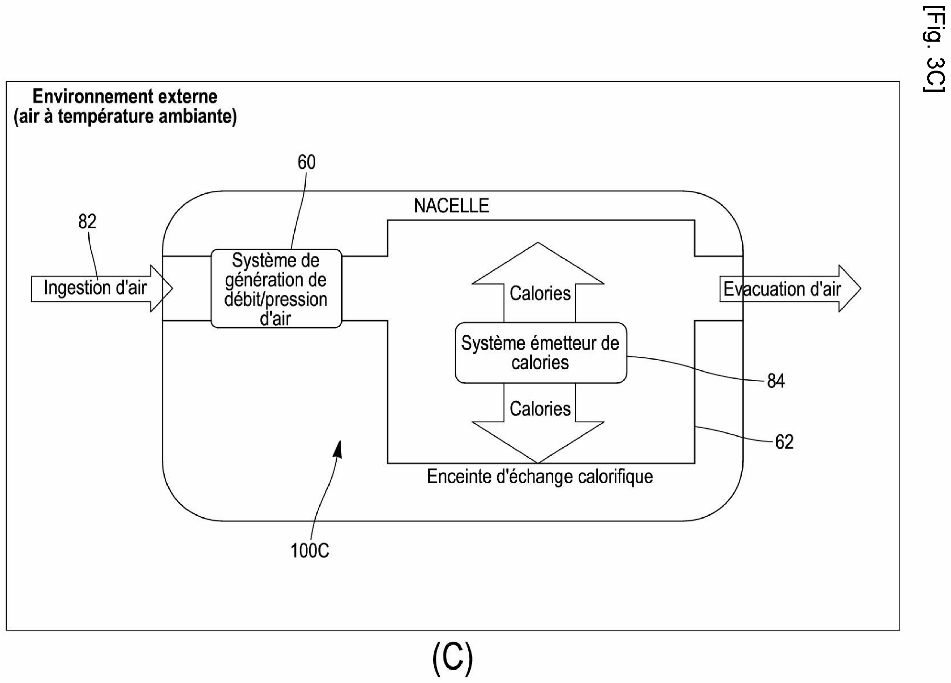

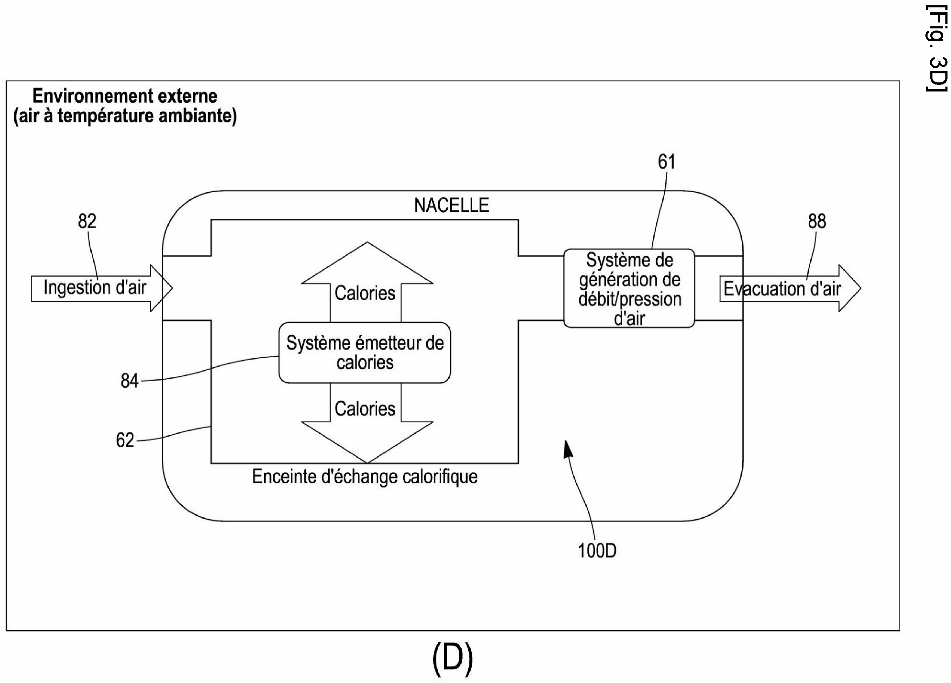

On va maintenant décrire, en référence à la figure 3, quatre principes fonctionnels de ventilation et de refroidissement pouvant être mis en œuvre dans le cadre d'un système de gestion thermique.

Selon un premier principe fonctionnel (A) correspondant à un échange forcé par surpression amont à l'échange calorifique ou thermique, le système de gestion thermique 100A disposé au sein de la nacelle 1 comprend un système 60 de génération de débit/pression d'air recevant de l'air frais à partir d'un conduit d'entrée d'air 82 et délivrant de l'air sous pression en entrée d'un système d'évacuation thermique 101A prévu pour extraire de l'énergie thermique hors d'un système émetteur thermique 84, en l'occurrence un turbogénérateur ou une pile à combustible. Le système d'évacuation thermique 101A émet un air chaud qui est évacué hors de la nacelle 1 via un conduit de sortie 88.

Selon un second principe fonctionnel (B) correspondant à un échange forcé par dépression aval à l'échange calorifique, le système de gestion thermique 100B disposé au sein de la nacelle 1 comprend un système d'évacuation thermique 101B couplé à un système émetteur thermique 84 et recevant en entrée un air frais de l'extérieur via un conduit d'entrée d'air 82. L'air chaud produit par le système d'évacuation thermique 101B est injecté en entrée d'un système 61 de génération de débit/dépression d'air qui délivre de l'air chaud d'évacuation vers l'extérieur de la nacelle 1 via un conduit de sortie 88. Selon un troisième principe fonctionnel (C) correspondant à un échange en convection naturelle par génération de débit amont à l'enceinte d'échange calorifique ou thermique, le système de gestion thermique 100C comprend un système de génération de débit/pression d'air 60 injectant de l'air frais sous pression dans une enceinte d'échange thermique 62 englobant un système émetteur thermique 84 tel qu'un turbogénérateur ou une pile à combustible. L'énergie thermique émise par ce système émetteur thermique 84 est évacuée de l'enceinte d'échange thermique 62 dans l'air éjecté de cette enceinte vers l'extérieur de la nacelle 1 via un conduit d'air 88.

Selon un quatrième principe fonctionnel (D) correspondant à un échange en convection naturelle par génération de débit aval à l'enceinte d'échangé calorifique ou thermique, le système de gestion thermique 100D comprend une enceinte d'échange thermique 62 contenant un système émetteur thermique 84, tel qu'un turbogénérateur ou une pile à combustible, et recevant de l'air frais en entrée via un conduit d'entrée d'air 82 et injectant de l'air chaud issu de l'échange thermique dans un système 61 de génération de débit/pression d'air délivrant de l'air chaud via un conduit de sortie 88 vers l'extérieur.

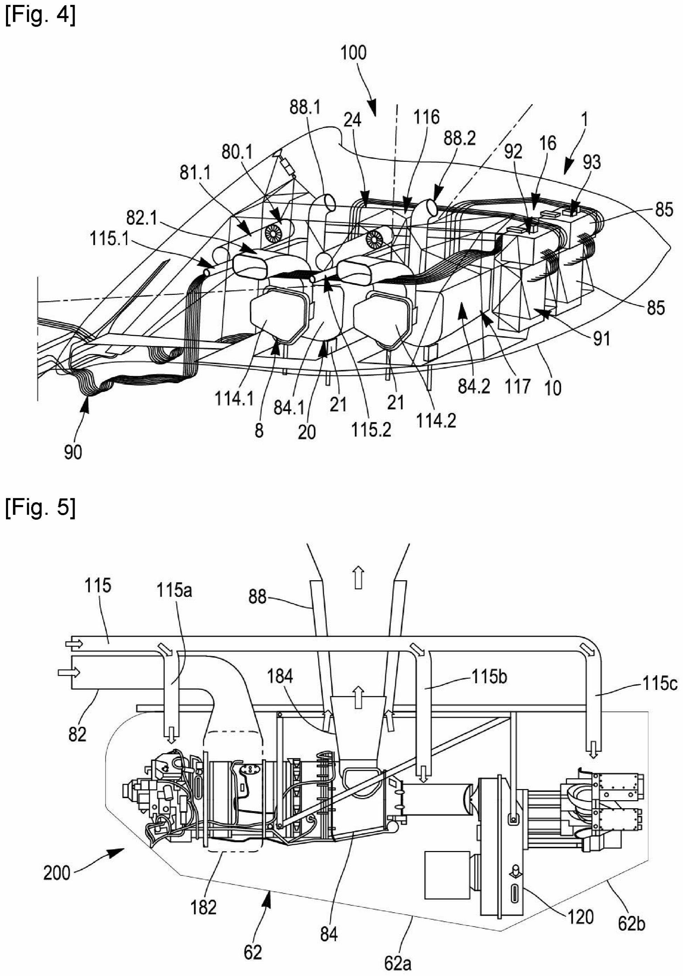

On va maintenant décrire, en référence aux figures 4 à 6, un exemple de réalisation d'un système de gestion thermique selon l'invention, correspondant au troisième principe fonctionnel (C) précédemment décrit mis en œuvre dans une nacelle intégrant deux turbogénérateurs et un générateur haute tension 20 NPES.

La nacelle 1 comprend deux turbogénérateurs 84.1,84.2 reliés en entrée à une ligne 24 d'alimentation en carburant et en sortie à un système de conversion d'énergie 85, à un système de batteries de stockage 92 et une nappe d'alimentation électrique haute tension 90 s'étendant au sein du dirigeable D pour alimenter les groupes de propulsion électrique.

Le système de gestion thermique 100 équipant la nacelle 1 intégrant les deux turbogénérateurs 84.1,84.2, comprend :
- deux conduits d'entrée d'air 81.1,81.2 de refroidissement des turbines intégrées dans les turbogénérateurs 84.1,84.2 ;
- deux ventilateurs 80.1,80.2 de refroidissement des turbines, disposés en aval des deux conduits d'entrée d'air 81.1,81.2 ;
- deux échangeurs thermiques 116 couplés aux deux turbogénérateurs 84.1,84.4 ;
- deux conduits d'entrée d'air 115.1,115.2 prévus pour le refroidissement des enceintes de capot avant 114.1,114.2 des turbogénérateurs 84.1,84.2 ;
- deux chambres plenum 82.1,82.2 reliées aux deux conduits d'entrée d'air 115.1,115.2 de refroidissement des capots avant 114.1,114.2 ;
- deux conduits 88.1,88.2 d'évacuation d'air et de gaz de combustion, de type « eductor ».

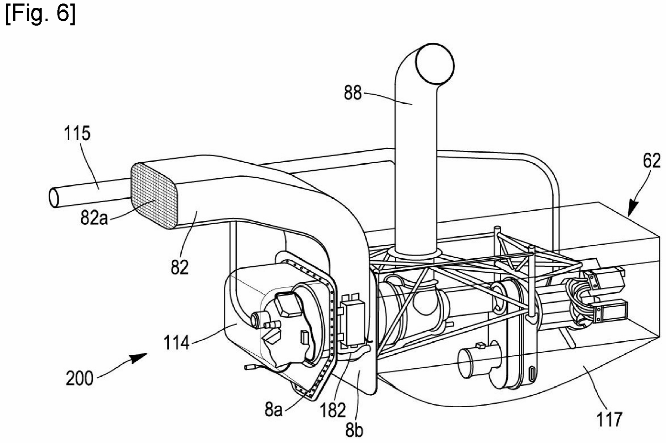

On va maintenant décrire, en référence aux figures 5 et 6, un exemple pratique de réalisation d'un système de gestion thermique 200 selon l'invention mis en œuvre pour le refroidissement d'un turbogénérateur 84 équipé d'une boîte de transmission 120 et inclus dans une enceinte de confinement feu 62. Cette enceinte de confinement 62 comporte un fond de drainage du carburant configuré par exemple selon deux pentes 62a, 62b. Le système de gestion thermique 200 comprend un conduit d'entrée d'air moteur 82 débouchant dans une chambre plenum 182 entourant une partie de la turbine du turbogénérateur 84 et un conduit 115 d'entrée d'air de ventilation sous pression dans l'enceinte de confinement 62. La chambre plenum prévue 182 est prévue pour homogénéiser l'air autour d'une grille d'aspiration équipant le conduit d'entrée d'air d'alimentation.

En référence à la figure 6, l'enceinte de confinement 62 comprend un capot avant 114 couvrant l'étage amont de la turbine et un capot arrière 117 couvrant l'étage aval de la turbine et la boîte de transmission 120. Le conduit d'entrée d'air de ventilation 115 alimente un premier conduit d'injection d'air 115a dans le capot avant 114, et des second et troisième conduits d'injection d'air 115b,115c dans le capot arrière 117. Les capots respectivement avant et arrière 114,117 sont chacun séparés de la chambre plenum 182 par une paroi anti -feu (ou firewall en anglais) 8a,8b.

Le système de gestion thermique 200 comprend en outre un conduit 88 d'évacuation d'air issu de l'enceinte de confinement 62, qui entoure le conduit 184 d'évacuation des gaz de combustion issus de la turbine. Ce conduit d'évacuation 88 présente une hauteur largement supérieure à celle du conduit d'évacuation des gaz de combustion et un diamètre sensiblement supérieur à celui de ce conduit d'évacuation des gaz de combustion, de sorte que cette configuration géométrique contribue à créer un effet Venturi appliqué au flux sortant d'air de ventilation mélangé au gaz de combustion.

Bien sûr d'autres modes de réalisation d'un système de gestion thermique peuvent être envisagés sans sortir du cadre de la présente invention dont l'objet est uniquement défini par les revendications. En particulier, on peut envisager d'autres géométries de l'enceint de confinement feu. La configuration du circuit d'injection d'air de ventilation peut varier, notamment s'agissant du nombre de conduits d'injection d'air dans l'enceinte de confinement feu.

## Revendications

1. Dirigeable (D) à propulsion électrique équipé d'au moins deux nacelles externes (1) de production d'énergie électrique, chacune des nacelles comprenant (i) des moyens de génération électrique implémentant au moins un turbogénérateur (84) inclus dans une enceinte de confinement feu (62) et pourvu d'un conduit (82) d'entrée d'air d'alimentation de turbine let d'un conduit (184) d'évacuation des gaz de combustion, et (ii) un système de gestion thermique (200) comprenant des moyens de ventilation (115) pour injecter de l'air extérieur dans l'enceinte de confinement feu (62), et des moyens (88) pour évacuer l'air de ventilation hors de l'enceinte de confinement (62), lesdits moyens d'évacuation de l'air de ventilation (88) entourant le conduit (184) d'évacuation des gaz de combustion.

2. Dirigeable selon la revendication précédente, chacune des nacelles implémentant au moins un turbogénérateur équipé d'une chambre plenum prévue pour homogénéiser l'air autour d'une grille d'aspiration équipant le conduit d'entrée d'air, l'enceinte de confinement (62) comprenant un capot avant (114) disposé en amont de la chambre plenum (182) et un capot arrière (117) disposé en aval de la chambre plenum (182).

3. Dirigeable selon la revendication précédente, dans lequel l'enceinte de confinement (62) comporte une première paroi anti-feu (8a) séparant le capot avant (114) de la chambre plenum (182) et une seconde paroi anti-feu (8b) séparant le capot arrière (117) de la chambre plenum (182).

4. Dirigeable selon l'une des deux revendications précédentes, dans lequel les moyens de ventilation (115) comprennent un premier conduit (115a) d'injection d'air dans le capot avant (114) et au moins un second conduit (115b,115c) d'injection d'air dans le capot arrière (117).

5. Dirigeable selon l'une quelconque des revendications précédentes, dans lequel les moyens d'évacuation d'air de ventilation comprennent un conduit d'évacuation présentant une hauteur largement supérieure à celle du conduit d'évacuation des gaz de combustion et un diamètre sensiblement supérieur à celui dudit conduit d'évacuation des gaz de combustion.

6. Dirigeable selon l'une quelconque des revendications précédentes, dans lequel les moyens de ventilation (115) sont agencés pour procurer une ventilation forcée de l'enceinte de confinement feu.

7. Dirigeable selon l'une quelconque des revendications précédentes, du type à structure rigide, dédié au transport de charges lourdes et au transfert vertical de ces charges.

## Patentansprüche

1. Elektrisch angetriebenes Luftschiff (D), ausgestattet mit mindestens zwei externen Gondeln (1) für eine Erzeugung von Elektroenergie,
jede der Gondeln umfassend (i) Mittel für eine Elektrizitätsgenerierung, wobei mindestens ein Turbogenerator (84) implementiert ist, der in einem Brandschutzgehäuse (62) eingeschlossen ist und mit einem Lufteinlasskanal (82) für die Turbinenversorgung und einem Verbrennungsgasabführkanal (184) versehen ist, und (ii) ein Wärmemanagementsystem (200), umfassend Ventilationsmittel (115) zum Einspritzen von Außenluft in das Brandschutzgehäuse (62) und Mittel (88) zum Abführen der Ventilationsluft aus dem Schutzgehäuse (62), wobei die Mittel zum Abführen der Ventilationsluft (88) den Verbrennungsgasabführkanal (184) umgeben.

2. Luftschiff nach dem vorstehenden Anspruch, wobei in jeder der Gondeln mindestens ein Turbogenerator implementiert ist, der mit einer Plenumkammer ausgestattet ist, die zum Homogenisieren der Luft um ein Ansauggitter vorgesehen ist, womit der Lufteinlasskanal ausrüstet ist, das Schutzgehäuse (62) umfassend eine vordere Abdeckung (114), die stromaufwärtig von der Plenumkammer (182) angeordnet ist, und eine rückwärtige Abdeckung (117), die stromabwärtig von der Plenumkammer (182) eingerichtet ist.

3. Luftschiff nach dem vorstehenden Anspruch, wobei das Schutzgehäuse (62) eine erste feuerfeste Wand (8a) vorweist, die die vordere Abdeckung (114) von der Plenumkammer (182) trennt, und eine zweite feuerfeste Wand (8b), die die rückwärtige Abdeckung (117) von der Plenumkammer (182) trennt.

4. Luftschiff nach einem der zwei vorstehenden Ansprüche, wobei die Ventilationsmittel (115) einen ersten Kanal (115a) für die Lufteinspritzung in die vordere Abdeckung (114) und mindestens einen zweiten Kanal (115b, 115c) für die Lufteinspritzung in die rückwärtige Abdeckung (117) umfassen.

5. Luftschiff nach einem der vorstehenden Ansprüche, wobei die Mittel für die Ventilation der Abluft einen Abführkanal umfassen, der eine Höhe aufweist, die weitgehend größer als die des Verbrennungsgasabführkanals ist, und einen Durchmesser, der im Wesentlichen größer als der des genannten Verbrennungsgasabführkanals ist.

6. Luftschiff nach einem der vorstehenden Ansprüche, wobei die Ventilationsmittel (115) zum Bereitstellen einer Zwangsventilation des Brandschutzgehäuses angeordnet sind.

7. Luftschiff nach einem der vorstehenden Ansprüche, vom Typ mit starrer Struktur, speziell für den Transport schwerer Lasten und für den vertikalen Transfer dieser Lasten.

## Claims

1. Electrically propelled airship (D) equipped with at least two external nacelles (1) for generating electrical energy,
each of the nacelles comprising (i) electrical generation means implementing at least one turbogenerator (84) contained in a fire containment vessel (62) and provided with an air inlet duct (82) for turbine feed air and a flue gas exhaust duct (184), and (ii) a thermal management system (200) comprising ventilation means (115) for injecting external air into the fire containment vessel (62), and means (88) for discharging the ventilation air from the containment vessel (62), said means (88) for discharging the ventilation air surrounding the flue gas exhaust duct (184).

2. Airship according to the preceding claim, each of the nacelles implementing at least one turbogenerator equipped with a plenum chamber provided to homogenize the air around a suction grid equipping the air inlet duct, the containment vessel (62) comprising a front cowl (114) arranged upstream of the plenum chamber (182) and a rear cowl (117) arranged downstream of the plenum chamber (182).

3. Airship according to the preceding claim, wherein the containment vessel (62) includes a first firewall (8a) separating the front cowl (114) from the plenum chamber (182) and a second firewall (8b) separating the rear cowl (117) from the plenum chamber (182).

4. Airship according to either of the two preceding claims, wherein the ventilation means (115) comprise a first duct (115a) for injecting air into the front cowl (114) and at least one second duct (115b,115c) for injecting air into the rear cowl (117).

5. Airship according to any of the preceding claims, wherein the means for discharging ventilation air comprise an exhaust duct having a height much greater than that of the flue gas exhaust duct and a diameter substantially greater than that of said flue gas exhaust duct.

6. Airship according to any of the preceding claims, wherein the ventilation means (115) are arranged to provide forced ventilation of the fire containment vessel.

7. Airship according to any of the preceding claims, of the rigid-structure type, dedicated to transporting heavy loads and to vertically transferring these loads.
